# EUROPÄISCHE PATENTSCHRIFT

(11) **EP 3 616 574 B1**
(45) Veröffentlichungstag und Bekanntmachung des Hinweises auf die Patenterteilung: **24.03.2021**
(21) Anmeldenummer: 19190444.0
(22) Anmeldetag: 07.08.2019
(51) Int. Cl.: A47J 31/52

(54) **KAFFEEAUTOMAT**
COFFEE MACHINE
MACHINE À CAFÉ

(30) Priorität: 29.08.2018 DE 102018214659
(43) Veröffentlichungstag der Anmeldung: 04.03.2020
(73) Patentinhaber: BSH Hausgeräte GmbH, 81739 München (DE)
(72) Erfinder: Brunner, Andreas, 83301 Traunreut (DE); Singhartinger, Josef, 83317 Teisendorf (DE); Reichel, Thomas, 83278 Traunstein (DE)

(56) Entgegenhaltungen:
- EP-A2- 2 135 533

## Beschreibung

Die vorliegende Erfindung betrifft einen Kaffeeautomaten zur Zubereitung von Kaffeegetränken. Die Erfindung betrifft außerdem ein Verfahren zum Betreiben eines Kaffeeautomaten.

Ein Kaffeeautomat ist z. B. aus der EP 2 135 533 A2 bekannt. Bei Kaffeeautomaten kann der Kunde üblicherweise eine Brühmenge und damit eine Kaffeegetränkemenge sowie eine Kaffeepulvermenge als unabhängige Parameter einstellen. Hierbei wird die Kaffeepulvermenge oftmals fälschlicherweise als "Kaffeestärke" bezeichnet. Dies suggeriert dem Kunden die Einstellung der Kaffeestärke (Kaffeepulvermenge je Kaffeegetränkemenge bzw. Brühmenge), obwohl tatsächlich durch diesen Parameter die Kaffeepulvermenge als Absolutwert und damit unabhängig von der Brühmenge bzw. der Kaffeegetränkemenge eingestellt wird und damit die tatsächliche Kaffeestärke variieren kann. Beispielsweise wird bei einer ausgewählten Kaffeestärke "stark" mit 12g Kaffeepulver bei einer gewünschten Kaffeegetränkemenge und damit einer Brühmenge von 100ml eine Kaffeepulvermenge von 120g/l bewirkt. Wählt der Kunde jedoch eine größere Kaffeegetränkemenge, von beispielsweise 200ml, aus, so werden bei der zuvor ausgewählten Kaffeestärke "stark" 12g Kaffeepulver auf nunmehr 200ml Brühmenge verteilt, wodurch das ausgegebene Kaffeegetränk lediglich noch 60g Kaffeepulver je Liter aufweist und dadurch hinsichtlich seiner Kaffeestärke deutlich schwächer ist als das Kaffeegetränk mit lediglich halber Kaffeegetränkemenge. Obwohl aber der Kunde in beiden Fällen die Einstellung "stark" ausgewählt hat, ist das erste Kaffeegetränk somit deutlich intensiver und stärker im Geschmack als das zweite Kaffeegetränk. Für den Kunden ist dies oft nicht verständlich, da er mit dem zweiten Kaffeegetränk lediglich ein doppelt so großes Getränk wollte, welches jedoch die gleichen Eigenschaften haben sollte, wie das erste Kaffeegetränk.

Die vorliegende Erfindung beschäftigt sich daher mit dem Problem, einen Kaffeeautomaten sowie ein Verfahren zum Betreiben eines solchen anzugeben, mittels welchem eine deutliche Steigerung des Bedienkomforts möglich ist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, erstmals die beiden Parameter Brühmenge (Kaffeegetränkemenge) und Kaffeepulvermenge miteinander zu verknüpfen und dadurch den vom Kunden einstellbaren Parameter "Kaffeestärke" unabhängig von der gewünschten Getränkemenge zu machen. Der erfindungsgemäße Kaffeeautomat weist hierzu eine Einstelleinrichtung auf, über welche zumindest eine auszugebende Kaffeegetränkemenge und eine Kaffeestärke auswählbar sind. Die Kaffeestärke stellt dabei ein Verhältnis einer Kaffeepulvermenge je Kaffeegetränkemenge dar und nicht wie bislang eine Absolutzahl der Kaffeepulvermenge. Ebenfalls vorgesehen ist eine Rechner- und Steuereinrichtung, die derart ausgebildet ist, dass sie anhand der ausgewählten Kaffeestärke eine zugehörige Kaffeepulvermenge an die ausgewählte Kaffeegetränkemenge anpasst, beispielsweise extrapoliert, so dass die Kaffeestärke unabhängig von der ausgewählten Kaffeegetränkemenge konstant bleibt. Der Kunde kann somit erstmals die gewünschte Kaffeegetränkemenge (Brühmenge) und die Kaffeestärke einstellen, wobei dann die für den Brühvorgang erforderliche Kaffeepulvermenge auf Basis dieser beiden Einstellungen mittels der Rechner- und Steuereinrichtung ermittelt und angepasst wird. Hierdurch wird nicht mehr wie bislang üblich die Kaffeestärke fälschlicherweise mit einer festen Kaffeepulvermenge verknüpft. Das bedeutet beispielsweise, dass die Kaffeestärke "stark" nicht mehr 12g Kaffeepulver als Absolutwert bedeutet, sondern beispielsweise 120g Kaffeepulver je Liter Kaffeegetränkemenge bzw. Brühmenge. Hierdurch ist es erstmals möglich, dem Kunden eine von ihm gewünschte und ausgewählte Kaffeestärke unabhängig von der ebenfalls vom Kunden ausgewählten Kaffeegetränkemenge bzw. Brühmenge auszugeben, wodurch eine deutliche Komfortsteigerung für den Kunden erzielt werden kann, da dieser unabhängig von der ausgewählten Kaffeegetränkemenge stets ein Kaffeegetränk mit gleichen Eigenschaften erhält.

Erfindungsgemäß ist die Rechner- und Steuereinrichtung derart ausgebildet, dass sie eine minimale und maximale in einer Brühkammer aufnehmbare Kaffeepulvermenge sowie eine minimale Wassermenge je Brühvorgang berücksichtigt und eine Anzahl an Brühvorgängen entsprechend der ausgewählten Kaffeestärke und der Kaffeegetränkemenge berechnet. Generell hat jeder Kaffeeautomat gewisse Limitierungen, beispielsweise die Größe einer Brühkammer, die es zulassen, dass jedes Kaffeegetränk mit nur einem einzigen Brühvorgang zubereitet werden kann. Beispielsweise würden bei einer vom Kunden gewünschten Kaffeestärke von "stark" und einer gleichzeitig gewünschten Kaffeegetränkemenge von 200ml insgesamt 24g Kaffeepulver benötigt. Wenn jedoch die Brühkammer des Kaffeeautomaten maximal 14g Kaffeepulver verarbeiten kann, müsste das gewünschte Kaffeegetränk auf mindestens zwei Brühvorgänge aufgeteilt werden.

Dies kann wie folgt geschehen:
Es wird beispielsweise die Anzahl der erforderlichen Brühvorgänge berechnet, wozu zunächst die Gerätekonstanten, wie beispielsweise eine maximale Kaffeepulvermenge, das heißt eine Maximalmenge an Kaffeepulver, das in einer Brühkammer in einem Brühvorgang verarbeitet werden kann, eine minimale Kaffeepulvermenge, das heißt eine Minimalmenge an Kaffeepulver, die für einen Brühvorgang erforderlich ist, sowie eine minimale Wassermenge, das heißt eine Minimalmenge an Wasser, die für einen Brühvorgang erforderlich ist, berücksichtigt werden. Über die Einstelleinrichtung kann der Kunden die gewünschte Kaffeegetränkemenge sowie die Kaffeestärke einstellen, wobei letztere ein Verhältnis der Kaffeepulvermenge zur Brühmenge bzw. zur Kaffeegetränkemenge darstellt. Berechnet wird nun die benötigte Kaffeepulvermenge, welche sich aus einem Produkt der gewünschten Kaffeegetränkemenge und der gewünschten Kaffeestärke ergibt. Eine minimale Anzahl an Brühvorgängen berechnet sich aus einem ganzzahlig aufgerundeten Verhältnis einer tatsächlich benötigten Kaffeepulvermenge zu einer maximalen Kaffeepulvermenge. Die maximale Anzahl an Brühvorgängen hinsichtlich des Kaffeepulvers errechnet sich dann aus einem ganzzahlig abgerundeten Verhältnis zwischen der benötigten Kaffeepulvermenge und der minimalen Kaffeepulvermenge, während sich eine maximale Anzahl an Brühvorgängen bezüglich des Wassers aus einem ganzzahlig abgerundeten Verhältnis aus benötigter Wassermenge zu minimaler Wassermenge ergibt.

Die maximale Anzahl der Brühvorgänge ist dabei der kleinere Wert der maximalen Anzahl an auf das Kaffeepulver bezogenen Brühvorgängen und der maximalen Anzahl an auf das Wasser bezogenen Brühvorgängen.

Im folgenden Beispiel soll dies anhand von Zahlen konkret berechnet werden:

Als Gerätekonstanten werden angegeben:
Maximale Kaffeepulvermenge = 14g,
minimale Kaffeepulvermenge = 5g,
minimale Wassermenge = 25ml.

Der Kunden stellt nun über die Einstelleinrichtung des Kaffeeautomaten folgendes Kaffeegetränk mit den gewünschten Parametern von 160ml Kaffeegetränkemenge und 150g je Liter Kaffeestärke ein.

Die benötigte Pulvermenge ergibt sich somit aus 160ml x 150g/l = 24g Kaffeepulver.

Die minimale Anzahl an Brühvorgängen ergibt sich aus dem ganzzahlig aufgerundeten Wert von 24g/14g = 2. Die maximale Anzahl an Brühvorgängen, bezogen auf das Kaffeepulver errechnet sich aus dem ganzzahlig abgerundeten Verhältnis zwischen 24g/5g = 4, wogegen sich die maximale Anzahl an Brühvorgängen bezogen auf das Wasser aus dem abgerundeten ganzzahligen Wert von 160ml/25ml = 6 ergibt. Die maximale Anzahl an Brühvorgängen ergibt sich somit aus dem kleineren der beiden zuvor berechneten Werten, das heißt im vorliegenden Fall aus der maximalen Anzahl an auf das Kaffeepulver bezogenen Brühvorgängen, das heißt 4. In der nachfolgenden Tabelle 1 sind dabei die folgenden Möglichkeiten angegeben, das Kaffeegetränk zuzubereiten:

**Tabelle 1: Zusammenhang zwischen Anzahl der Brühvorgängen, Kaffeepulvermenge und Wassermenge/Brühvorgang bei einem gewünschten Kaffeegetränk mit einer Kaffeestärke von 150g/l und einer gewünschten Kaffeegetränkemenge von 160ml.**

| Anzahl Brühvorgänge | Kaffeepulvermenge | Wassermenge / Brühvorgang | Eigenschaft |
|---|---|---|---|
| 2 | 12g | 80ml | Schnellste Zubereitung, einfacher Geschmack |
| 3 | 8g | 53ml | |
| 4 | 6g | 41ml | Langsamste Zubereitung, bester Geschmack |

Die Auswahl der zuvor berechneten Brühvorgänge zur Herstellung des gewünschten Kaffeegetränks kann dabei alternativ vom Kunden selbst über die Einstelleinrichtung erfolgen oder aber selbständig von der Rechner- und Steuereinrichtung ausgewählt werden. Bei der zweiten Alternative bestehen dabei grundsätzlich folgende Möglichkeiten:
a) der Kaffeeautomat optimiert die Zubereitungszeit und die Lebensdauer des Kaffeeautomaten, weshalb stets die minimale Anzahl an Brühvorgängen ausgewählt wird,
b) der Kaffeeautomat optimiert den Geschmack, wodurch stets die maximale Anzahl an Brühvorgängen ausgewählt wird, da die meisten Aromen am Anfang des Brühvorgangs aus dem Kaffeepulver gelöst werden,
c) der Kaffeeautomat sucht den besten Kompromiss nach einem vordefinierten Regelwerk, wonach beispielsweise kein Brühvorgang mehr als 60ml Wasser beinhalten soll, da bei einer höheren Wassermenge die Qualität des herzustellenden Kaffeegetränks abfällt.

Selbstverständlich ist auch denkbar, dass der Kunden anhand weiterer Einstellmöglichkeiten über die Einstelleinrichtung die Möglichkeit erhält, den Kaffeeautomaten in eine Richtung, beispielsweise Geschmack oder Lebensdauer, zu lenken.

Bei der zweiten Alternative wird die Anzahl an Brühvorgängen vom Gerät ausgewählt, beispielsweise mittels eines zugehörigen Kennfeldes, wie dies aus der nachfolgenden Tabelle 2 ersichtlich ist, wobei einzelne Parameter an je Brühvorgang verwendeter Kaffeepulvermenge bzw. Wassermenge weiter verfeinert werden.

**Tabelle 2: Kennfeld für die Unterteilung der Brühvorgänge bei einem gewünschten Kaffeegetränk mit einer Kaffeestärke von 150g/l und einer gewünschten Kaffeegetränkemenge von 160ml.**

| Einstellung | Anzahl Brühvorgänge | Brühvorgang Nr. | Kaffeepulvermenge/ Brühvorgang | Wassermenge/ Brühvorgang |
|---|---|---|---|---|
| Cafe Crema 160ml "stark" 150g/l | 2 | 1 | 10g | 100 ml |
| | | 2 | 6g | 60 ml |
| | 3 | 1 | 8g | 50 ml |
| | | 2 | 6g | 50 ml |
| | | 3 | 10g | 60 ml |
| | 4 | 1 | 6g | 40 ml |
| | | 2 | 6g | 40 ml |
| | | 3 | 6g | 40 ml |
| | | 4 | 6g | 40 ml |

Bei einer weiteren vorteilhaften Ausführungsform der erfindungsgemäßen Lösung weist der Kaffeeautomat eine Anzeigeeinrichtung auf, über welche zumindest eine Anzahl der für das gewünschte Kaffeegetränk vorgesehenen Brühvorgänge, einen Kaffeebohnenverbrauch, einen Wasserverbrauch und/oder einen Energieverbrauch anzeigbar sind bzw. angezeigt werden. Da der Kunde üblicherweise aus den ausgewählten Parametern "Kaffeestärke" und "Kaffeegetränkemenge" nicht ableiten kann, wie viele Brühvorgänge der Kaffeeautomat zur Zubereitung benötigt, ist es von großem Vorteil, sofern zumindest diese dem Kunden vor dem Getränkestart über die Anzeigeeinrichtung angezeigt werden. Es ist es selbstverständlich auch denkbar, dass bei Auswahl der Getränkeparameter bzw. nach der Auswahl derselben über die Anzeige eine Richtung angezeigt wird, mit welcher Zubereitungszeit zu rechnen ist.

Der zuvor beschriebene Kaffeeautomat wird dabei wie folgt betrieben:
Zunächst werden über die Einstelleinrichtung vom Kunden eine auszugebende Kaffeegetränkemenge sowie eine gewünschte Kaffeestärke ausgewählt, wobei die ausgewählte Kaffeestärke ein Verhältnis von einer Kaffeepulvermenge je Kaffeegetränkemenge darstellt. Anschließend wird über die Rechner- und Steuereinrichtung anhand der ausgewählten Kaffeestärke eine zugehörige Kaffeepulvermenge an die ausgewählte Kaffeegetränkemenge angepasst, so dass unabhängig von der seitens des Kunden gewünschten Kaffeegetränkemenge dieser ein Kaffeegetränk mit stets gleichbleibender gewünschter Kaffeestärke erhält.

Die Rechner- und Steuereinrichtung berücksichtigt dabei vorzugsweise eine minimal und maximal in einer Brühkammer aufnehmbare Kaffeepulvermenge sowie eine minimale Wassermenge je Brühvorgang und berechnet daraus eine Anzahl an Brühvorgängen entsprechend der ausgewählten Kaffeestärke und der Kaffeegetränkemenge.

Bei dem erfindungsgemäßen Verfahren ist es nun für den Kunden optional möglich, die zuvor von der Rechner- und Steuereinrichtung berechnete Anzahl an Brühvorgängen über die Einstelleinrichtung auszuwählen, wobei sich hier der Kunden beispielsweise zwischen einer schnellen Zubereitung mit eingeschränktem Geschmack und einer langsameren Zubereitung mit besserem Geschmack entscheiden kann. Selbstverständlich ist auch denkbar, dass die Rechner- und Steuereinrichtung alternativ die berechnete Anzahl an Brühvorgängen entsprechend der zuvor ausgewählten Kaffeestärke und der zuvor ausgewählten Kaffeegetränkemenge selbst einstellt und hierzu beispielsweise ein Kennfeld, wie dies gemäß der Tabelle 2 dargestellt ist, nutzt.

Insgesamt haben der erfindungsgemäße Kaffeeautomat und das erfindungsgemäße Verfahren den großen Vorteil, dass die Kaffeepulvermenge jetzt an die Brühmenge, das heißt die gewünschte Kaffeegetränkemenge angepasst wird, da sich die ausgewählte Kaffeestärke auf die Brühmenge bezieht und als Verhältnis von Kaffeepulvermenge zur Brühmenge definiert ist.

Durch eine weitere Verfeinerung des Verfahrens in Richtung einer größeren Anzahl an durchgeführten Brühvorgängen je gewünschtem Kaffeegetränk kann insbesondere auch die Qualität bei größeren gewünschten Kaffeegetränkemengen gesteigert werden. Dem Kunden kann darüber hinaus über die Anzeigeeinrichtung und die dort angezeigte Anzahl an erforderlichen Brühvorgängen eine weitere Einstellmöglichkeit an die Hand gegeben werden, mit dem er den Kaffeegeschmack sowie die Zubereitungszeit vergleichsweise leicht beeinflussen kann.

## Patentansprüche

1. Kaffeeautomat zur Zubereitung von Kaffeegetränken, mit einer Einstelleinrichtung, über welche zumindest eine auszugebende Kaffeegetränkemenge und eine Kaffeestärke auswählbar sind, wobei die Kaffeestärke ein Verhältnis einer Kaffeepulvermenge je Kaffeegetränkemenge darstellt, und mit einer Rechner- und Steuereinrichtung, die derart ausgebildet ist, dass sie anhand der ausgewählten Kaffeestärke eine zugehörige Kaffeepulvermenge an die ausgewählte Kaffeegetränkemenge anpasst, so dass die Kaffeestärke unabhängig von der ausgewählten Kaffeegetränkemenge konstant ist, **dadurch gekennzeichnet, dass** die Rechner- und Steuereinrichtung derart ausgebildet ist, dass sie eine minimal und maximal in einer Brühkammer aufnehmbare Kaffeepulvermenge sowie eine minimale Wassermenge je Brühvorgang berücksichtigt und eine Anzahl an Brühvorgängen entsprechend der ausgewählten Kaffeestärke und der Kaffeegetränkemenge berechnet.

2. Kaffeeautomat nach Anspruch 1, **dadurch gekennzeichnet, dass** über die Einstelleinrichtung eine von der Rechner- und Steuereinrichtung berechnete Anzahl an Brühvorgängen entsprechend der ausgewählten Kaffeestärke und der Kaffeegetränkemenge einstellbar ist.

3. Kaffeeautomat nach Anspruch 1, **dadurch gekennzeichnet, dass** die Rechner- und Steuereinrichtung derart ausgebildet ist, dass sie die berechnete Anzahl an Brühvorgängen entsprechend der ausgewählten Kaffeestärke und der Kaffeegetränkemenge selbst einstellt.

4. Kaffeeautomat nach Anspruch 3, **dadurch gekennzeichnet, dass** die Rechner- und Steuereinrichtung derart ausgebildet ist, dass sie die berechnete Anzahl an Brühvorgängen anhand eines Kennfeldes einstellt.

5. Kaffeeautomat nach einem der vorhergehenden Ansprüche, **dadurch gekennzeichnet, dass** eine Anzeigeeinrichtung vorgesehen ist, über welche zumindest eine Anzahl der für das gewünschte Kaffeegetränk vorgesehenen Brühvorgänge, ein Kaffeebohnenverbrauch, ein Wasserverbrauch und/oder ein Energieverbrauch anzeigbar sind/ist.

6. Verfahren zum Betreiben eines Kaffeeautomaten, bei dem über eine Einstelleinrichtung zumindest eine auszugebende Kaffeegetränkemenge und eine Kaffeestärke ausgewählt werden, wobei die Kaffeestärke ein Verhältnis einer Kaffeepulvermenge je Kaffeegetränkemenge darstellt, und bei dem eine Rechner- und Steuereinrichtung anhand der ausgewählten Kaffeestärke eine zugehörige Kaffeepulvermenge an die ausgewählte Kaffeegetränkemenge anpasst, so dass die Kaffeestärke unabhängig von der ausgewählten Kaffeegetränkemenge konstant bleibt, **dadurch gekennzeichnet, dass** die Rechner- und Steuereinrichtung eine minimal und maximal in einer Brühkammer aufnehmbare Kaffeepulvermenge sowie eine minimale Wassermenge je Brühvorgang berücksichtigt und eine Anzahl an Brühvorgängen entsprechend der ausgewählten Kaffeestärke und der Kaffeegetränkemenge berechnet.

7. Verfahren nach Anspruch 6, **dadurch gekennzeichnet, dass** über die Einstelleinrichtung eine von der Rechner- und Steuereinrichtung berechnete Anzahl an Brühvorgängen entsprechend der ausgewählten Kaffeestärke und der Kaffeegetränkemenge eingestellt wird, oder dass die Rechner- und Steuereinrichtung die berechnete Anzahl an Brühvorgängen entsprechend der ausgewählten Kaffeestärke und der Kaffeegetränkemenge selbst einstellt.

8. Verfahren nach einem der Ansprüche 6 bis 7, **dadurch gekennzeichnet, dass** über eine Anzeigeeinrichtung zumindest eine Anzahl der für das gewünschte Kaffeegetränk vorgesehenen Brühvorgänge, ein Kaffeebohnenverbrauch, ein Wasserverbrauch und/oder ein Energieverbrauch angezeigt werden.

## Claims

1. Automatic coffee machine for preparing coffee beverages, with an adjusting facility, via which at least an amount of coffee beverage to be dispensed and a coffee strength can be selected, wherein the coffee strength is a ratio of amount of coffee powder per amount of coffee beverage, and with a computing and control facility, which is embodied such that, on the basis of the selected coffee strength, it adapts an associated amount of coffee powder to the selected amount of coffee beverage, so that the coffee strength is constant regardless of the amount of coffee beverage selected, **characterised in that** the computing and control facility is embodied such that it takes into consideration a minimum and maximum amount of coffee powder that can be accommodated in a brewing chamber as well as a minimum amount of water per brewing procedure and calculates a number of brewing procedures according to the selected coffee strength and the amount of coffee beverage.

2. Automatic coffee machine according to claim 1, **characterised in that**, via the adjusting facility, a number of brewing procedures calculated by the computing and control facility can be adjusted according to the selected coffee strength and the amount of coffee beverage.

3. Automatic coffee machine according to claim 1, **characterised in that** the computing and control facility is embodied such that it adjusts the calculated number of brewing procedures itself according to the selected coffee strength and the amount of coffee beverage.

4. Automatic coffee machine according to claim 3, **characterised in that** the computing and control facility is embodied such that it adjusts the calculated number of brewing procedures on the basis of a characteristic map.

5. Automatic coffee machine according to one of the preceding claims, **characterised in that** a display facility is provided, via which at least a number of brewing procedures provided for the desired coffee beverage, a coffee bean consumption, a water consumption and/or an energy consumption can be displayed.

6. Method for operating an automatic coffee machine, in which via an adjusting facility, at least an amount of coffee beverage to be dispensed and a coffee strength are selected, wherein the coffee strength represents a ratio of amount of coffee powder per amount of coffee beverage, and in which a computing and control facility, on the basis of the selected coffee strength, adapts an associated amount of coffee powder to the selected amount of coffee beverage, so that the coffee strength remains constant regardless of the amount of coffee beverage selected, **characterised in that** the computing and control facility takes into consideration a minimum and maximum amount of coffee powder that can be accommodated in a brewing chamber as well as a minimum amount of water per brewing procedure and calculates a number of brewing procedures according to the selected coffee strength and the amount of coffee beverage.

7. Method according to claim 6, **characterised in that**, via the adjusting facility, a number of brewing procedures calculated by the computing and control facility is adjusted according to the selected coffee strength and the amount of coffee beverage, or that the computing and control facility adjusts the calculated number of brewing procedures itself according to the selected coffee strength and the amount of coffee beverage.

8. Method according to one of claims 6 to 7, **characterised in that**, via a display facility, at least a number of brewing procedures provided for the desired coffee beverage, a coffee bean consumption, a water consumption and/or an energy consumption are displayed.

## Revendications

1. Machine à café pour la préparation de boissons au café, comprenant un dispositif de réglage par l'intermédiaire duquel au moins une quantité de boisson au café à distribuer et une intensité du café sont sélectionnables, dans laquelle l'intensité du café représente un rapport d'une quantité de poudre de café par quantité de boisson au café, et comprenant un dispositif de calcul et de commande qui est réalisé de manière à ce qu'à l'aide de l'intensité du café sélectionnée, il adapte une quantité de poudre de café correspondante à la quantité de boisson au café sélectionnée, de sorte qu'indépendamment de la quantité de boisson au café sélectionnée, l'intensité du café est constante, **caractérisée en ce que** le dispositif de calcul et de commande est réalisé de manière à ce qu'il tienne compte d'une quantité de poudre de café minimale et maximale pouvant être réceptionnée dans une chambre de percolation ainsi que d'une quantité d'eau minimale par opération de percolation et qu'il calcule un nombre d'opérations de percolation conformément à l'intensité du café et à la quantité de boisson au café sélectionnées.

2. Machine à café selon la revendication 1, **caractérisée en ce que** par l'intermédiaire du dispositif de réglage, un nombre d'opérations de percolation calculé par le dispositif de calcul et de commande est réglable conformément à l'intensité du café et à la quantité de boisson au café sélectionnées.

3. Machine à café selon la revendication 1, **caractérisée en ce que** le dispositif de calcul et de commande est réalisé de manière à ce qu'il règle lui-même le nombre d'opérations de percolation calculé, conformément à l'intensité du café et à la quantité de boisson au café sélectionnées.

4. Machine à café selon la revendication 3, **caractérisée en ce que** le dispositif de calcul et de commande est réalisé de manière à ce qu'il règle le nombre d'opérations de percolation calculé à l'aide d'un diagramme caractéristique.

5. Machine à café selon l'une quelconque des revendications précédentes, **caractérisée en ce qu'**un dispositif d'affichage est ménagé par l'intermédiaire duquel au moins un nombre d'opérations de percolation, prévu pour la boisson au café souhaitée, une consommation de grains de café, une consommation d'eau et/ou une consommation d'énergie peut/peuvent être affiché(s).

6. Procédé de fonctionnement d'une machine à café, dans lequel au moins une quantité de boisson au café à distribuer et une intensité du café sont sélectionnées par l'intermédiaire d'un dispositif de réglage, dans lequel l'intensité du café représente un rapport d'une quantité de poudre de café par quantité de boisson au café, et dans lequel un dispositif de calcul et de commande adapte, à l'aide de l'intensité du café sélectionnée, une quantité de poudre de café correspondante à la quantité de boisson au café sélectionnée de sorte qu'indépendamment de la quantité de boisson au café sélectionnée, l'intensité du café reste constante, **caractérisé en ce que** le dispositif de calcul et de commande tient compte d'une quantité de poudre de café minimale et maximale pouvant être réceptionnée dans une chambre de percolation ainsi que d'une quantité d'eau minimale par opération de percolation et calcule un nombre d'opérations de percolation conformément à l'intensité du café et à la quantité de boisson au café sélectionnées.

7. Procédé selon la revendication 6, **caractérisé en ce que** par l'intermédiaire du dispositif de réglage, un nombre d'opérations de percolation calculé par le dispositif de calcul et de commande est réglé conformément à l'intensité du café et à la quantité de boisson au café sélectionnées, ou **en ce que** le dispositif de calcul et de commande règle lui-même le nombre d'opérations de percolation calculé, conformément à l'intensité du café et à la quantité de boisson au café sélectionnées.

8. Procédé selon l'une quelconque des revendications 6 à 7, **caractérisé en ce que** par l'intermédiaire d'un dispositif d'affichage, au moins un nombre d'opérations de percolation, prévu pour la boisson au café souhaitée, une consommation de grains de café, une consommation d'eau et/ou une consommation d'énergie sont affichés.
